# EUROPÄISCHE PATENTANMELDUNG

(11) **EP 2 407 330 A1**
(43) Veröffentlichungstag der Anmeldung: **18.01.2012**
(21) Anmeldenummer: 10007199.2
(22) Anmeldetag: 13.07.2010
(51) Int. Cl.: B60H 1/34

(54) **Luftausstroemer als Ausstattungsteil fuer Kraftfahrzeuge**

(71) Anmelder: Key Plastics Germany GmbH, 57368 Lennestadt (DE)
(72) Erfinder: Richard, Joachim, 57368 Lennestadt-Saalhausen (DE)
(74) Vertreter: Köchling, Conrad-Joachim

(57) **Zusammenfassung**

Um einen Luftausströmer als Ausstattungsteil für Kraftfahrzeuge mit einem Strömungsleitteil (13), das schwenkbar angeordnet ist, derart zu gestalten, dass dieser einerseits in eine Spotbelüftungslage und andererseits in eine Diffus-Belüftungslage einstellbar ist, wobei die Verstellung möglichst einfach für den Benutzer durchzuführen sein soll, wird vorgeschlagen, dass das Strömungsleitteil (13) aus einem ringförmigen Halter besteht, der eine Nabe (8) und diese mit dem ringförmigen Halter verbindende Stege (8') aufweist, dass die Lamellen (5) an den Stegen (8') schwenkbeweglich gehalten sind, so dass sie in eine Spotbelüftungsanlage einstellbar sind, in der die Lamellen (5) parallel zur Mittellängsachse des Ausströmergehäuses (1) ausgerichtet sind, und in eine Diffusbelüftungslage einstellbar sind, in der sie in einem Winkel zwischen 0 ° und 90 ° zur Mittellängsachse ausgerichtet sind, wobei zur Verstellung aller Lamellen (5) gemeinsam ein rastbarer Betätigungsknopf (2,7) vorgesehen ist, der in der Nabe (8) des Halters verschieblich und lösbar arretierbar gehalten ist.

## Beschreibung

Die Erfindung betrifft einen Luftausströmer als Ausstattungsteil für Kraftfahrzeuge, mit einem an einen Luftströmungskanal anschließbaren hohlen Gehäuse mit einem Anschlussstutzen für den Luftzufuhrkanal und einer Auslassöffnung für Luft zum Innenraum des Kraftfahrzeuges, in der ein Strömungsleitteil angebracht ist, wobei das Gehäuse vorzugsweise zur Auslassöffnung hin halbkugelartig erweitert ist und in dieser Erweiterung das mit seiner Außenkontur der halbkugeligen Form angepasstes Strömungsleitteil aufweist, in dem Luftführungselemente in Form von Lamellen, vorzugsweise verstellbar gehalten sind, wobei das Strömungsleitteil in der Erweiterung schwenkbar angeordnet ist.

Luftausströmer dieser Art sind im Stand der Technik bekannt. Der Erfindung liegt die Aufgabe zugrunde, einen Luftausströmer derart zu gestalten, dass dieser einerseits in eine Spotbelüftungslage und andererseits in eine Diffusbelüftungslage einstellbar ist, wobei die Verstellung möglichst einfach für den Benutzer durchzuführen sein soll.

Zur Lösung dieser Aufgabe schlägt die Erfindung vor, dass das Strömungsleitteil aus einem ringförmigen Halter besteht, der eine Nabe und diese mit dem ringförmigen Halter verbindende Stege aufweist, dass die Lamellen mittelbar oder unmittelbar an den Stegen schwenkbeweglich gehalten sind, so dass sie in eine Spotbelüftungsanlage einstellbar sind, in der die Lamellen parallel zur Mittellängsachse des Ausströmergehäuses ausgerichtet sind, und in eine Diffusbelüftungslage einstellbar sind, in der sie in einem Winkel zwischen 0 ° und 90 ° zur Mittellängsachse ausgerichtet sind, wobei zur Verstellung aller Lamellen gemeinsam ein rastbarer Betätigungsknopf vorgesehen ist, der in der Nabe des Halters verschieblich und lösbar arretierbar gehalten ist.

Gemäß dieser Ausgestaltung besteht das Strömungsleitteil aus einem ringförmigen Halter mit vorzugsweise einer Außenfläche, die an die halbkugelartige Erweiterung des Gehäuses angepasst ist. Dieser Halter weist mittig eine hohle Nabe auf, von der radial Stege abgehen, die die Nabe mit dem ringförmigen Halter verbinden. Die Lamellen sind unmittelbar an den Stegen oder auch mittelbar über an den Stegen befestigte Elemente schwenkbeweglich gehalten, so dass sie einerseits in eine Spotbelüftungslage einstellbar sind und andererseits in eine Diffusbelüftungslage.

In der Diffusbelüftungslage schließen die Lamellen vorzugsweise einen Winkel von etwa 30 ° mit der Mittellängsachse des Gehäuses ein. Jede Lamelle ist aus einem der Ringform angepassten Segment gebildet, welches eine schmale Stirnkante in Strömungsrichtung aufweist und welches zwischen seinen Stirnkanten eine Fläche ausbildet, die zur Luftleitung geeignet ist. Alle Lamellen sind über geeignete mechanische Mittel derart mit dem Betätigungsknopf verbunden, dass durch den Betätigungsknopf eine Verstellung der Lamellen in die beiden möglichen Extremlagen möglich ist. Der Betätigungsknopf ist rastbar. Vorzugsweise ist die Ausbildung so gestaltet, dass bei unbetätigtem Betätigungsknopf dieser frontseitig, also in Strömungsrichtung vor dem Strömungsleitteil vorragt und die Lamellen in der Spotbelüftungslage ausgerichtet sind. Es ist hierdurch für den Benutzer in einfacher Weise möglich, durch manuelles Erfassen des Betätigungsknopfes die Schwenkbewegung des Strömungsleitteiles relativ zum Gehäuse durchzuführen, um die Strömungsrichtung zu beeinflussen.

Andererseits kann der Betätigungsknopf gedrückt werden, so dass er entgegen der Strömungsrichtung bewegt wird. In der eingedrückten Lage ist dieser Betätigungsknopf lösbar arretiert gehalten. Vorzugsweise in dieser Lage sind die Lamellen durch den Betätigungsknopf in die Diffusbelüftungslage verstellt. In dieser Situation ist eine Verschwenkung des Strömungsleitteiles relativ zum Gehäuse nicht erforderlich und sogar unerwünscht, worauf später noch eingegangen wird. Deswegen ist es kein Nachteil, dass der Betätigungsknopf dann nicht gegenüber dem Strömungsleitteil vorsteht, sondern quasi versenkt in der Nabe gehalten ist.

Um zu erreichen, dass das Strömungsleitteil bei in Spotbelüftungslage verstellten Lamellen zwar schwenkbar im Gehäuse angeordnet ist, die Schwenkstellung aber aufrechterhalten wird, sofern der Benutzer nicht manuell auf das Strömungsleitteil beziehungsweise den Betätigungsknopf einwirkt, ist vorgesehen, dass der Betätigungsknopf mittelbar mit einem Hebel mit Bremsbelag gekoppelt ist, der mit dem Bremsbelag in der Spotbelüftungslage an der Wandung des Gehäuses oder der Erweiterung des Gehäuses anliegt, und der in der Diffusbelüftungslage mit Abstand von der Wandung positioniert ist.

Hierbei ist vorgesehen, dass der Betätigungsknopf über mechanische Mittel mittelbar mit einem Hebel mit Bremsbelag gekoppelt ist. Dieser Hebel liegt in der Spotbelüftungslage mit dem Bremsbelag an der Wandung des Gehäuses oder der Erweiterung des Gehäuses an. Hiermit wird erreicht, dass zwar der Benutzer weiterhin das Strömungsleitteil, beispielsweise durch Erfassen des Betätigungsknopfes in dem Gehäuse schwenken kann, jedoch erfolgt die Schwenkbewegung entgegen der Bremskraft des mit Bremsbelag versehenen Hebels. Dies bewirkt, dass das Strömungsleitteil in der jeweils gewünschten Position gehalten wird und sich nicht selbständig aufgrund von Bewegung des Fahrzeugs oder dergleichen verstellen kann.

Sofern die Diffusbelüftungslage eingestellt ist, ist der Hebel mit Abstand von der Wandung positioniert, so dass der Bremsbelag nicht an der Wandung anliegt. Prinzipiell ist es somit denkbar, dass dann das Strömungsleitteil in alle Schwenk- oder Drehrichtungen verstellt werden kann, sofern keine Maßnahmen vorgesehen sind, die dies verhindern, was später noch beschrieben wird.

Vorzugsweise ist dabei vorgesehen, dass an dem Betätigungsknopf radial abragend Finger mit endseitigem Führungszapfen angeordnet sind, die in Führungskurven von Mitnehmern eingreifen, die mit den Lamellen in Eingriff stehen, wobei der Betätigungsknopf in einer gegenüber der Nabe ausgeschobenen Position die Finger mit den Führungszapfen in einen ersten Endbereich der Führungskurven verstellt und die Lamellen in Spotlüftungslage ausrichtet, sowie bei gegenüber der Nabe eingeschobener Position die Finger mit den Führungszapfen in einen zweiten Endbereich der Führungskurven verstellt und die Lamellen in die Diffusbelüftungslage ausrichtet.

Durch diese Ausgestaltung ist in einfacher Weise die Verstellung sämtlicher Lamellen durch Betätigung des Betätigungsknopfes ermöglicht. Die Führungskurven können in den als Flächenteil ausgebildeten Mitnehmern als schräg zur Mittellängsachse des Gehäuses gerichtete Langlöcher ausgebildet sein, in welchen jeweils der Führungszapfen eines Fingers entlang gleitet.

Zudem ist hierbei bevorzugt vorgesehen, dass mindestens ein Mitnehmer einen radial nach außen zur Wandung des Gehäuses oder der Erweiterung hin vorragenden Halter aufweist, der den Hebel bildet, der an seinem freien Ende den Bremsbelag trägt, so dass bei ausgeschobener Position des Betätigungsknopfes der Bremsbelag an der Wandung anliegt.

Durch die entsprechende Ausgestaltung mindestens eines Mitnehmers ist die Anordnung des Bremsbelages samt Hebel in einfacher Weise konstruktiv verwirklicht und funktionell realisiert.

Um die lösbare Arretierung des Betätigungsknopfes zu realisieren, insbesondere in Form einer Push-Push-Betätigung, ist vorgesehen, dass an der Nabe eine Herzkurve gehalten ist, die mit einem am Betätigungsknopf schwenkbeweglich angeordneten Hebel mit in die Herzkurve eingreifendem Zapfen gekoppelt ist, und dass der Betätigungsknopf aus der Position in der er aus der Nabe ausgeschoben ist, in die Position, in der er in die Nabe eingeschoben ist, gegen die Kraft einer Feder betätigbar ist.

Solche Herzkurven, in die entsprechende Zapfen eingreifen, sind im Stand der Technik vielfach bekannt, insbesondere bei Ausstattungsteilen für Kraftfahrzeuge. Durch diese Ausbildung ist in einfacher Weise die gewünschte Arretierung des Betätigungsknopfes sowie die lösbare Arretierung realisierbar.

Um zu erreichen, dass das Strömungsleitteil bei in Diffusstellung verstellten Bedienknopf und Lamellen zentrisch im Gehäuse beziehungsweise in der Gehäuseerweiterung angeordnet ist, ist vorgesehen, dass am Gehäuse ein trichterförmiger Fänger im Stellweg des gehäuseinneren Endes des Bedienknopfes ausgebildet ist und das Ende des Bedienknopfes kegelartig formangepasst verjüngt ist, so dass bei in die Nabe eingeschobenem Bedienknopf die Verjüngung in den trichterförmigen Fänger eingreift und das Strömungsleitteil zwangsweise koaxial zur Gehäusemittellängsachse ausgerichtet ist.

Dieser trichterförmige Fänger sowie die entsprechend kegelartig ausgebildete Verjüngung des Bedienknopfes ist bei unbetätigtem Bedienknopf unwirksam, wenn dieser also in Strömungsrichtung über das Strömungsleitteil vorderseitig vorragt. Sofern der Bedienknopf gedrückt wird und die Lamellen in die DiffusStellung verstellt werden, wird gleichzeitig das Ende des Bedienknopfes, welches kegelartig verjüngt ist, in den trichterförmigen Fänger eingedrückt und somit wird das Strömungsleitteil derart ausgerichtet, dass es quasi koaxial zur Gehäusemittellängsachse ausgerichtet ist. Hierdurch wird erreicht, dass das Strömungsleitteil nicht im Gehäuse verschwenkt werden kann, so dass eine optimale diffuse Luftzirkulation erreicht wird.

Zusätzlich kann vorgesehen sein, dass der ringförmige Halter des Strömungsleitteils mittels eines ringförmigen Formteils in der Erweiterung des Gehäuses schwenkbeweglich gehalten ist, wobei das Formteil mit zwei gegenüberliegenden Zapfen und Schwenkwegbegrenzungsstegen in entsprechende Lochungen in der Wandung der Erweiterung eingesetzt ist und um die Zapfen schwenkbar ist und der Halter an zwei einander gegenüberliegenden Zapfen des Formteils schwenkbar gehalten ist, vorzugsweise mit Schwenkwegbegrenzungsmitteln, wobei die beiden so gebildeten Schwenkachsen nach Art eines Kardangelenkes einander kreuzend gerichtet sind.

Diese Ausbildung dient insbesondere dazu, sicherzustellen, dass möglichst beim Verschwenken des Strömungsleitteiles keine Teile des ringförmigen Formteiles in den Gehäusekanal hineinragen, die die Luftströmung behindern könnten und eine höhere Gebläseleistung erforderlich machen würden. Die Verschwenkung der Teile kann in der Weise erfolgen, dass das ringförmige Formteil schwenkwinkelbegrenzt um eine quergerichtete Achse relativ zum Gehäuse beziehungsweise der Gehäuseerweiterung schwenkbar ist und der ringförmige Halter an dem ringförmigen Formteil wiederum um eine quergerichtete Achse begrenzt schwenkbeweglich angeordnet ist, wobei diese Achse die andere Achse kreuzt. Es wird damit eine Art kardanische Verbindung zur Verfügung gestellt, die die Schwenkbeweglichkeit ermöglicht, ohne dass wesentliche Teile in den Strömungskanal des Gehäuses hineinragen und die Luftströmung behindern.

Ein Ausführungsbeispiel der Erfindung ist in der Zeichnung gezeigt und im Folgenden näher beschrieben. Es zeigt:
- Figur 1: einen erfindungsgemäßen Luftausströmer in Explosionsdarstellung;
- Figur 2: den Luftausströmer in einer Seitenansicht;
- Figur 3 der: desgleichen in Draufsicht von Vorderseite her gesehen;
- Figur 4: den Luftausströmer in Seitenansicht in einer gegenüber der Figur 2 um 90 ° um die Mittellängsachse gedrehten Position;
- Figur 5: desgleichen im Schnitt B-B der Figur 4 gesehen;
- Figur 6: den Luftausströmer wiederum in einer Seitenansicht;
- Figur 7: den Luftausströmer im Schnitt A-A der Figur 6 gesehen;
- Figur 8: den Luftausströmer in Draufsicht von vorn gesehen;
- Figur 9: desgleichen im Schnitt C-C der Figur 8 gesehen;
- Figur 10: einen Luftausströmer in Seitenansicht;
- Figur 11: desgleichen im Schnitt A-A der Figur 10 gesehen;
- Figur 12: wiederum den Luftausströmer in Seitenansicht;
- Figur 13: die Seitenansicht im Schnitt B-B der Figur 12 gesehen;

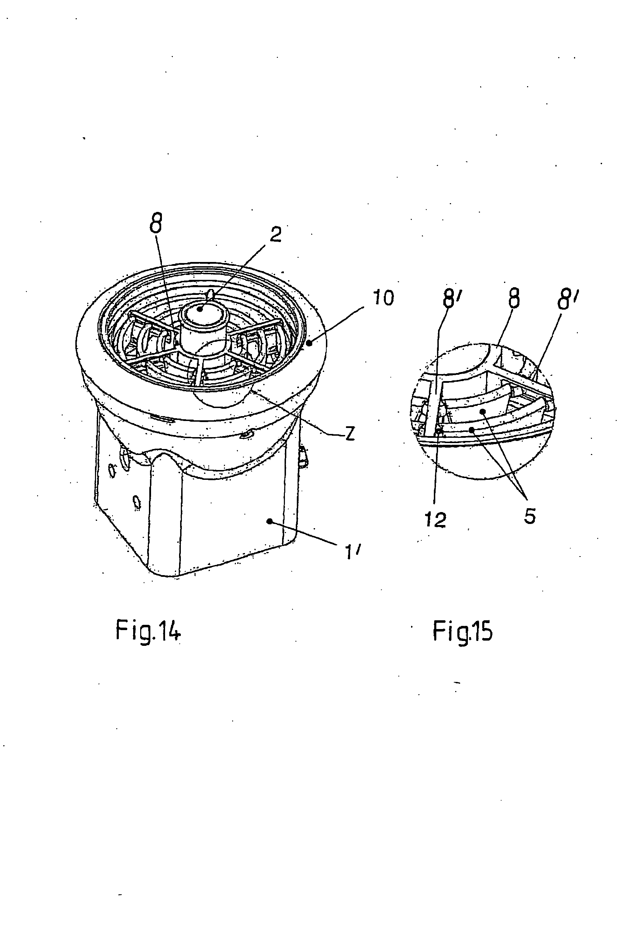

- Figur 14: den Luftausströmer von schräg vorn gesehen;
- Figur 15: das Detail "Z" der Figur 14 in vergrößerter Ansicht;
- Figur 16 bis 20: Einzelteile des Luftausströmers in Einzeldarstellung;
- Figur 21: eine teilkomplettierte Ansicht des Luftausströmers von vorn gesehen.

In der Zeichnung ist ein Luftausströmer als Ausstattungsteil für Kraftfahrzeuge gezeigt. Dieser weist ein an einen Luftströmungskanal anschließbares hohles Gehäuse 1 mit einem Anschlussstutzen 1', der im Ausführungsbeispiel quadratischen Querschnitt hat für den Luftzufuhrkanal und einer oberen Auslassöffnung 15 zum Innenraum des Kraftfahrzeuges auf, in der ein Strömungsleitteil angeordnet ist. Das Gehäuse 1 ist vorzugsweise zur kreisförmigen Auslassöffnung 15 hin halbkugelartig erweitert. In dieser Erweiterung 1" ist das mit seiner Außenkontur der halbkugeligen Form angepasste Strömungsleitteil 13 angeordnet, in welchem Luftführungselemente in Form von Lamellen 5 vorzugsweise verstellbar gehalten sind. Das Strömungsleitteil 13 ist in der Erweiterung 1" schwenkbar angeordnet, so dass der Benutzer die Strömungsrichtung variieren kann.

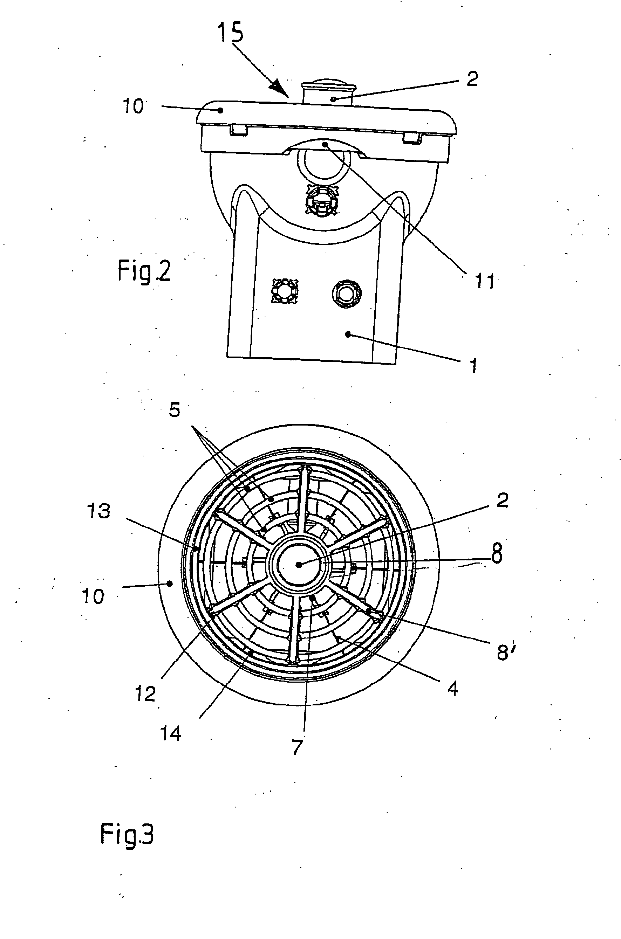

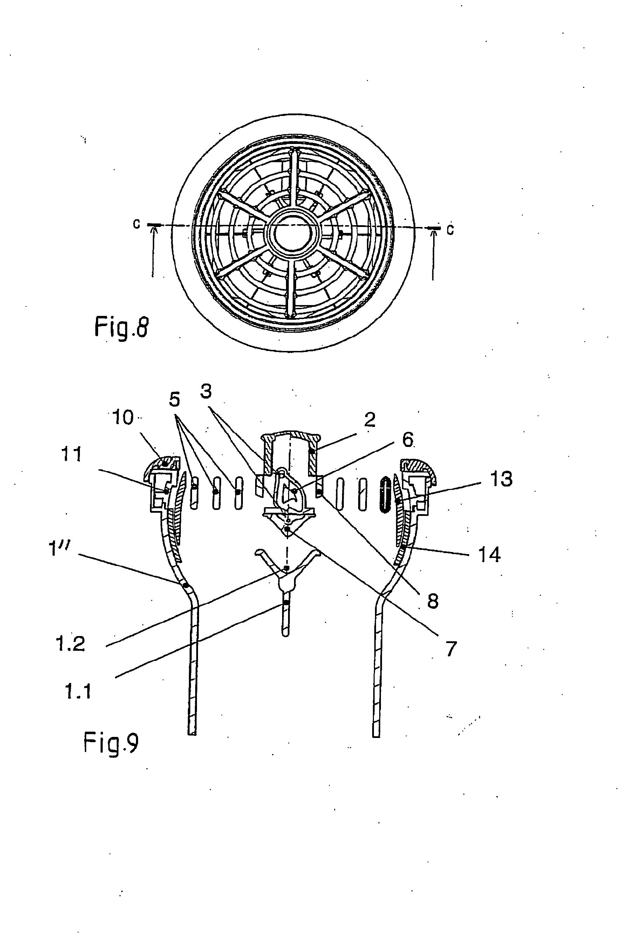

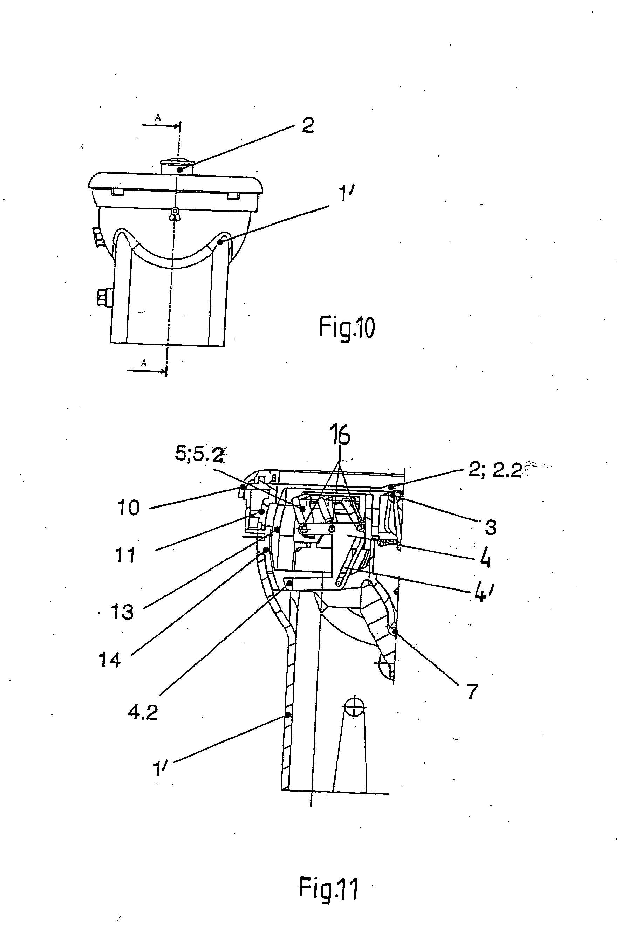

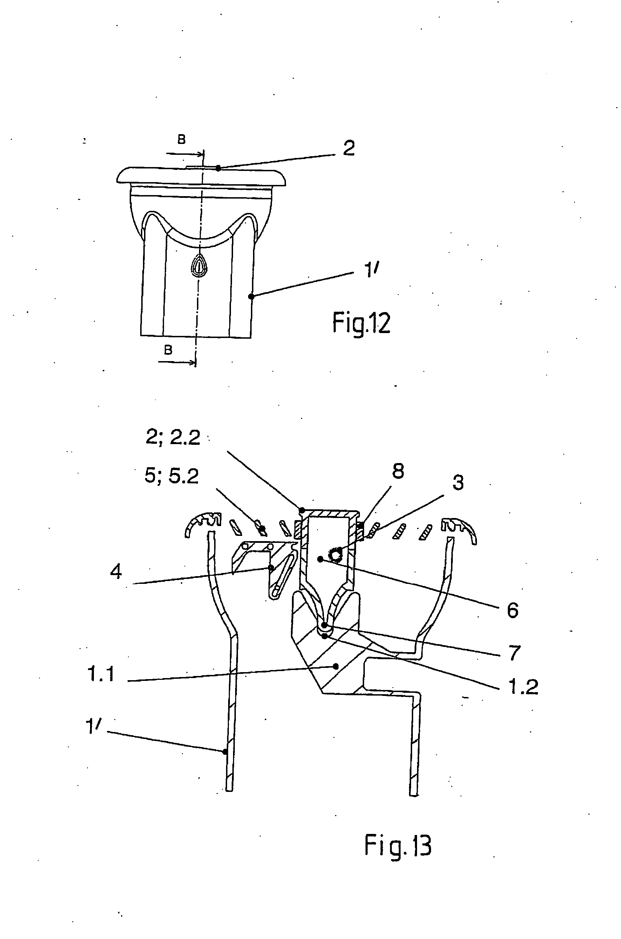

Das Strömungsleitteil 13 besteht aus einem ringförmigen Halter, der in fertig montierter Lage, eine hülsenförmige Nabe 8 und diese mit dem ringförmigen Halter (13) verbindende Stege 8' aufweist. Die Lamellen 5 sind zu einer geeigneten Montageeinheit zusammengefasst und in diesem Montageelement schwenkbeweglich gehalten. Dieses Montageelement ist an den Stegen 8' fixiert, so dass die Lamellen quasi an den Stegen 8' schwenkbeweglich gehalten sind. Die Lamellen 5 sind in eine Spotbelüftungslage einstellbar, in der die Lamellen 5 parallel zur Mittellängsachse des Ausströmergehäuses 1 ausgerichtet sind. Diese Stellung ist beispielsweise in Figur 3, Figur 5, Figur 7, Figur 9 gezeigt. Des Weiteren sind die Lamellen 5 in eine Diffusbelüftungslage einstellbar, in der sie in einen Winkel zwischen 0 ° und 90 ° zur Mittellängsachse ausgerichtet sind, vorzugsweise in einem Winkel von ca. 30 °. Diese Stellung ist beispielsweise in Figur 11, Figur 13 verdeutlicht. Zur Verstellung aller Lamellen 5 gemeinsam ist ein rastbarer Betätigungsknopf 2,7 vorgesehen, der in der Nabe 8 des Halters (13) verschieblich und lösbar arretierbar gehalten ist.

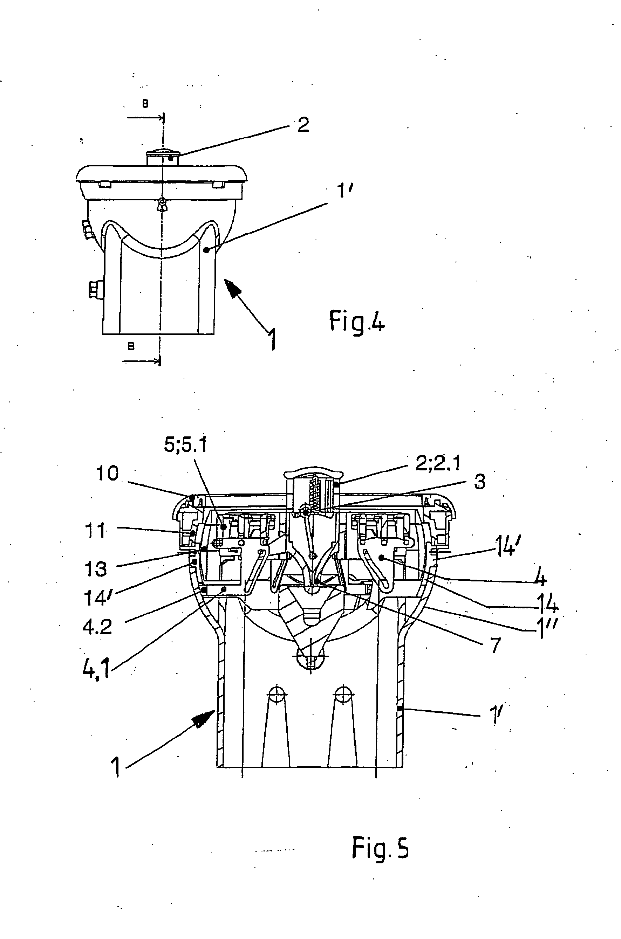

Der Betätigungsknopf 2,7 ist mittelbar mit einem Hebel 4.1, mit einem Bremsbelag 4.2 gekoppelt. Dieser liegt in der Spotbelüftungslage, wie insbesondere in Figur 5 gezeigt, an der Wandung des Gehäuses 1 beziehungsweise der Erweiterung 1" des Gehäuses innen an. In der Diffusbelüftungslage weist der Hebel 4.1 mit Bremsbelag 4.2 Abstand von der Wandung des Gehäuses 1 beziehungsweise der Erweiterung 1" auf, wie in Figur 11 gezeigt.

An dem Betätigungsknopf 2,7, insbesondere dessen Unterteil (7), sind radial abragend Finger 7' mit endseitigen Führungszapfen 7" angeordnet, die in Führungskurven 4' von Mitnehmern 4 eingreifen, die mit den Lamellen 5 verbunden sind, insbesondere gelenkig, wie beispielsweise in Figur 11 ersichtlich. Dort sind die Gelenkstellen 16 ersichtlich. Sofern der Betätigungsknopf 2,7 in einer gegenüber der Nabe 8 ausgeschobenen Position ist, sind die Finger 7' mit den Führungszapfen 7" in einem ersten Endbereich der Führungskurve 4', nämlich im oberen Endbereich. Demzufolge sind die daran gekoppelten Lamellen 5 in die Spotlüftungslage ausgerichtet, wie besonders gut in Figur 5 ersichtlich ist. Sofern der Betätigungsknopf 2,7 gegenüber der Nabe 8 eingeschoben ist, sind die Finger 7' mit den Führungszapfen 7" in den zweiten, unteren Endbereich der Führungskurven 4' verstellt, so dass die Lamellen 5 sich entsprechend bewegen und in die Diffusbelüftungslage ausgerichtet werden, wie insbesondere in Figur 11 ersichtlich ist. Vorzugsweise weist einer der Mitnehmer 4 einen radial nach außen zur Wandung des Gehäuses 1 oder zur Wandung der Erweiterung hin vorragenden Halter auf, der den Hebel 4.1 bildet, der an seinem freien Ende den Bremsbelag 4.2 trägt, so dass bei ausgeschobener Position des Betätigungsknopfes der Bremsbelag 4.2 an der Wandung des Gehäuses anliegt.

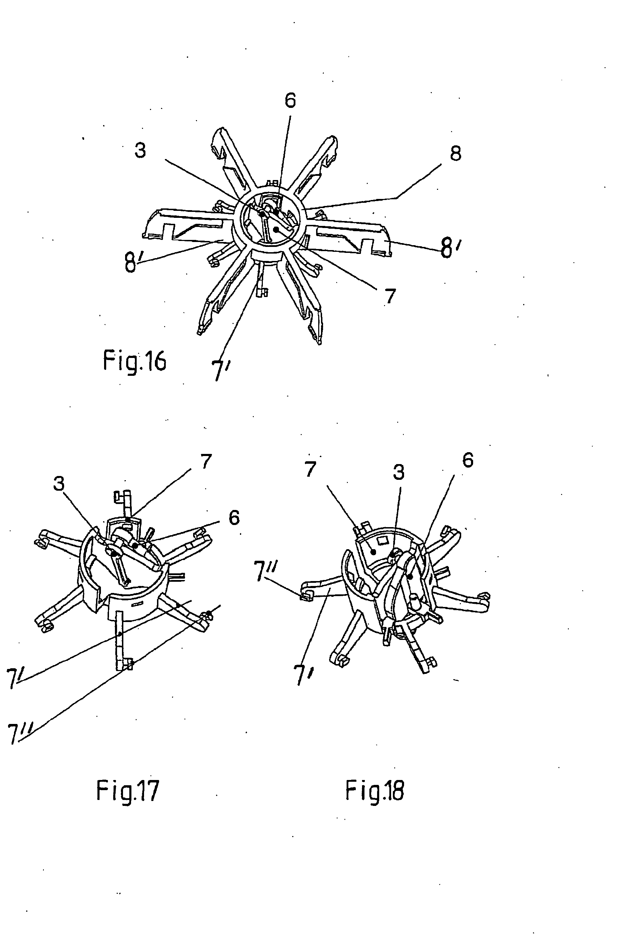

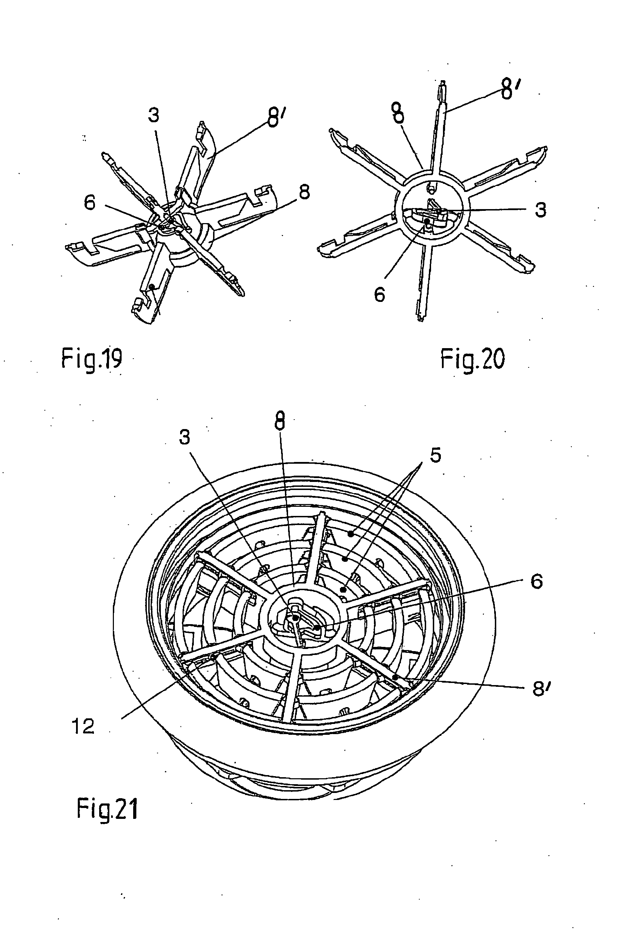

Die lösbare Rastverbindung des Betätigungsknopfes 2,7 relativ zur Nabe 8 wird durch eine an sich bekannte Push-Push-Betätigung realisiert. Dazu ist an der Nabe 8 eine Herzkurve 6 angeordnet, wie insbesondere aus den Figuren 16 bis 21 ersichtlich ist. Diese Herzkurve ist mit einem am Betätigungsknopf 2,7 schwenkbeweglich angeordneten Hebel 3 in Wirkverbindung, welcher in die Herzkurve mit einem Zapfen eingreift. Zudem ist der Betätigungsknopf 2,7 aus der Position, in der er aus der Nabe 8 ausgeschoben ist, in die Position, in der er in die Nabe 8 eingeschoben ist, gegen die Kraft einer Feder 9 betätigbar.

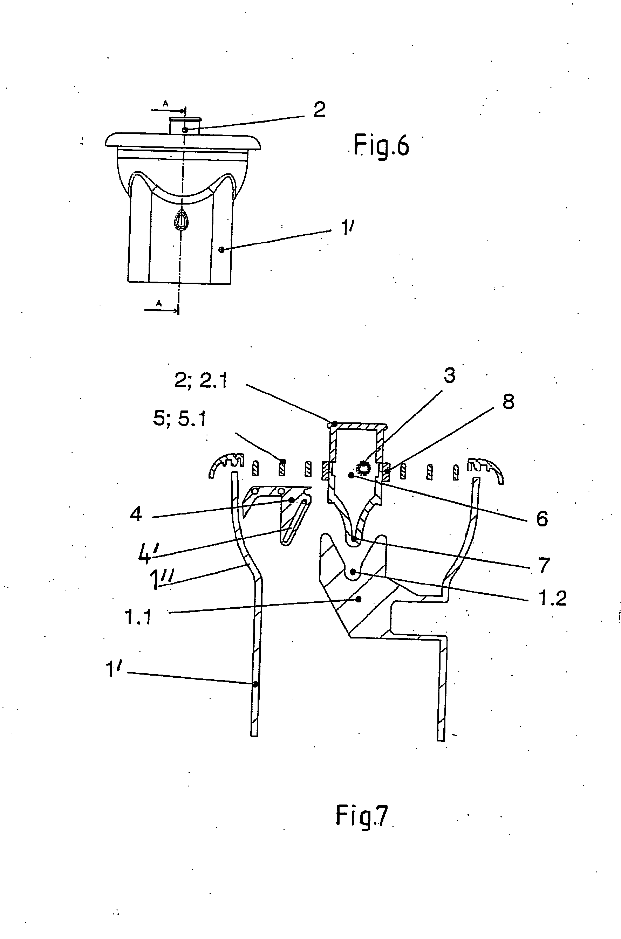

Wie beispielsweise besonders gut in Figur 7 ersichtlich, ist am Gehäuse 1 ein trichterförmiger Fänger 1.1 im Stellweg des gehäuseinneren Endes 7 des Bedienknopfes 2,7 ausgebildet. Das Ende des Bedienknopfes 2,7 ist formangepasst kegelartig verjüngt, so dass bei in die Nabe 8 eingeschobenen Bedienknopf 2,7 die Verjüngung in den trichterförmigen Fänger 1.1 in dem Bereich 1.2 eingreift. Damit ist das Strömungsleitteil 13 zwangsweise koaxial zur Gehäusemittellängsachse ausgerichtet und nicht schwenkbar. Schwenkbar ist also das Teil nur dann, wenn der Bedienknopf 2,7 aus der Nabe 8 nach außen herausgefahren ist.

Eine Besonderheit besteht noch darin, dass der ringförmige Halter des Strömungsleitteiles 13 mittels eines ringförmigen Formteiles 14 in der Erweiterung 1" des Gehäuses 1 schwenkbeweglich gehalten ist. Das Formteil 14 weist zwei gegenüberliegende Zapfen 14" mit Schwenkbegrenzungsstegen auf, die in entsprechende Lochungen 1"' der Wandung des Gehäuses 1 eingesetzt sind. Damit ist das Formteil 14 um die Zapfen 14" schwenkbar. Der Halter (13) wiederum ist an zwei einander gegenüberliegenden Zapfen 14' des Formteiles 14 schwenkbar gehalten, wobei auch die Wandung des Halters entsprechende Lochungen 13' zur Aufnahme der Zapfen 14' aufweist. Somit ist der Halter (13) an den gegenüberliegenden Zapfen 14' des Formteiles 14 schwenkbar. Es sind somit zwei sich kreuzende Schwenkachsen vorgesehen, so dass eine Verschwenkung nach Art eines Kardangelenkes möglich ist. Die Schwenkbewegungen sind jeweils begrenzt.

Hierdurch wird ein großer Schwenkwinkel ermöglicht, ohne dass Teile des ringförmigen Halters (13) in den Strömungsweg im Inneren des Gehäuses 1 vorragen und die Strömung behindern können.

In den Zeichnungen ist mit der Bezugsziffer 2.1 gekennzeichnet, dass der Betätigungsknopf 2 sich in der ausgefahrenen Position befindet, während die Position 2.2 den Betätigungsknopf in der eingefahrenen Position zeigt. Die Bezugsziffern 5.1 bezeichnen das Lamellenpaket aus den Lamellen 5 in Spotbelüftungsposition, während die Position 5.2 das Lamellenpaket aus den Lamellen 5 in der Position Diffusbelüftung zeigen.

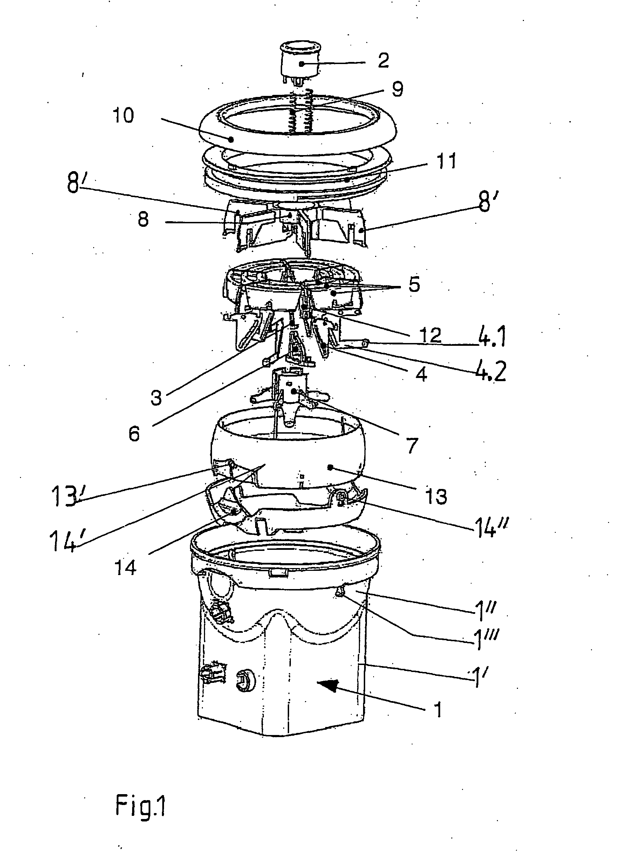

Eine vordere Abdeckung des Gehäuses bildet ein Abdeckring 11. Lagerleisten 12 sind vorgesehen, um die Positionierung in dem ringförmigen Halter (13) zu gewährleisten, wie aus der Gegenüberstellung von Figur 1 und 3 ersichtlich ist. Mit 10 ist schließlich ein Blendring für das Gehäuse bezeichnet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Luftausströmer als Ausstattungsteil für Kraftfahrzeuge, mit einem an einen Luftströmungskanal anschließbaren hohlen Gehäuse (1) mit einem Anschlussstutzen (1') für den Luftzufuhrkanal und einer Auslassöffnung (15) für Luft zum Innenraum des Kraftfahrzeuges, in der ein Strömungsleitteil (13) angebracht ist, wobei das Gehäuse vorzugsweise zur Auslassöffnung (15) hin halbkugelartig erweitert ist und in dieser Erweiterung (1") das mit seiner Außenkontur der halbkugeligen Form angepasstes Strömungsleitteil (13) aufweist, in dem Luftführungselemente in Form von Lamellen (5), vorzugsweise verstellbar gehalten sind, wobei das Strömungsleitteil (13) in der Erweiterung (1") schwenkbar angeordnet ist, **dadurch gekennzeichnet, dass** das Strömungsleitteil (13) aus einem ringförmigen Halter besteht, der eine Nabe (8) und diese mit dem ringförmigen Halter verbindende Stege (8') aufweist, dass die Lamellen (5) mittelbar oder unmittelbar an den Stegen (8') schwenkbeweglich gehalten sind, so dass sie in eine Spotbelüftungsanlage einstellbar sind, in der die Lamellen (5) parallel zur Mittellängsachse des Ausströmergehäuses (1) ausgerichtet sind, und in eine Diffusbelüftungslage einstellbar sind, in der sie in einem Winkel zwischen 0 ° und 90 ° zur Mittellängsachse ausgerichtet sind, wobei zur Verstellung aller Lamellen (5) gemeinsam ein rastbarer Betätigungsknopf (2,7) vorgesehen ist, der in der Nabe (8) des Halters verschieblich und lösbar arretierbar gehalten ist.

2. Luftausströmer nach Anspruch 1, **dadurch gekennzeichnet, dass** der Betätigungsknopf (2,7) mittelbar mit einem Hebel (4.1) mit Bremsbelag (4.2) gekoppelt ist, der mit dem Bremsbelag (4.2) in der Spotbelüftungslage an der Wandung des Gehäuses (1) oder der Erweiterung (1") des Gehäuses (1) anliegt, und der in der Diffusbelüftungslage mit Abstand von der Wandung positioniert ist.

3. Luftausströmer nach Anspruch 1 oder 2, **dadurch gekennzeichnet, dass** an dem Betätigungsknopf (2,7) radial abragend Finger (7') mit endseitigem Führungszapfen (7") angeordnet sind, die in Führungskurven (4') von Mitnehmern (4) eingreifen, die mit den Lamellen (5) in Eingriff stehen, wobei der Betätigungsknopf (2,7) in einer gegenüber der Nabe (8) ausgeschobenen Position die Finger (7') mit den Führungszapfen (7") in einen ersten Endbereich der Führungskurven (4') verstellt und die Lamellen (5) in Spotlüftungslage ausrichtet, sowie bei gegenüber der Nabe (8) eingeschobener Position die Finger (7') mit den Führungszapfen (7") in einen zweiten Endbereich der Führungskurven (4') verstellt und die Lamellen (5) in die Diffusbelüftungslage ausrichtet.

4. Luftausströmer nach Anspruch 3, **dadurch gekennzeichnet, dass** mindestens ein Mitnehmer (4) einen radial nach außen zur Wandung des Gehäuses (1) oder der Erweiterung (1") hin vorragenden (4.1) Halter aufweist, der den Hebel bildet, der an seinem freien Ende den Bremsbelag (4.2) trägt, so dass bei ausgeschobener Position des Betätigungsknopfes (2,7) der Bremsbelag (4.2) an der Wandung anliegt.

5. Luftausströmer nach einem der Ansprüche 1 bis 4, **dadurch gekennzeichnet, dass** an der Nabe (8) eine Herzkurve (6) gehalten ist, die mit einem am Betätigungsknopf (2,7) schwenkbeweglich angeordneten Hebel (3) mit in die Herzkurve (6) eingreifendem Zapfen gekoppelt ist, und dass der Betätigungsknopf (2,7) aus der Position in der er aus der Nabe (8) ausgeschoben ist, in die Position, in der er in die Nabe (8) eingeschoben ist, gegen die Kraft einer Feder (9) betätigbar ist.

6. Luftausströmer nach einem der Ansprüche 1 bis 5, **dadurch gekennzeichnet, dass** am Gehäuse (1) ein trichterförmiger Fänger (1.1) im Stellweg des gehäuseinneren Endes des Bedienknopfes (2,7) ausgebildet ist und das Ende (7) des Bedienknopfes (2,7) kegelartig formangepasst verjüngt ist, so dass bei in die Nabe (8) eingeschobenem Bedienknopf (2,7) die Verjüngung in den trichterförmigen Fänger (1.1) eingreift und das Strömungsleitteil zwangsweise koaxial zur Gehäusemittellängsachse ausgerichtet ist.

7. Luftausströmer nach einem der Ansprüche 1 bis 6, **dadurch gekennzeichnet, dass** der ringförmige Halter des Strömungsleitteils (13) mittels eines ringförmigen Formteils (14) in der Erweiterung (1") des Gehäuses (1) schwenkbeweglich gehalten ist, wobei das Formteil (14) mit zwei gegenüberliegenden Zapfen (14") und Schwenkwegbegrenzungsstegen in entsprechende Lochungen (1"') in der Wandung der Erweiterung (1") eingesetzt ist und um die Zapfen (14") schwenkbar ist und der Halter (13) an zwei einander gegenüberliegenden Zapfen (14') des Formteils (14) schwenkbar gehalten ist, vorzugsweise mit Schwenkwegbegrenzungsmitteln, wobei die beiden so gebildeten Schwenkachsen nach Art eines Kardangelenkes einander kreuzend gerichtet sind.

## Geänderte Patentansprüche

### Geänderte Patentansprüche gemäss Regel 137(2) EPÜ.

**1.** Luftausströmer als Ausstattungsteil für Kraftfahrzeuge, mit einem an einen Luftströmungskanal anschließbaren hohlen Gehäuse (1) mit einem Anschlussstutzen (1') für den Luftzufuhrkanal und einer Auslassöffnung (15) für Luft zum Innenraum des Kraftfahrzeuges, in der ein Strömungsleitteil (13) angebracht ist, wobei das Gehäuse zur Auslassöffnung (15) hin halbkugelartig erweitert ist und in dieser Erweiterung (1") das mit seiner Außenkontur der halbkugeligen Form angepasstes Strömungsleitteil (13) aufweist, in dem Luftführungselemente in Form von Lamellen (5), verstellbar gehalten sind, wobei das Strömungsleitteil (13) in der Erweiterung (1") schwenkbar angeordnet ist, das Strömungsleitteil (13) aus einem ringförmigen Halter besteht, der eine Nabe (8) und diese mit dem ringförmigen Halter verbindende Stege (8') aufweist, die Lamellen (5) mittelbar oder unmittelbar an den Stegen (8') schwenkbeweglich gehalten sind, so dass sie in eine Spotbelüftungsanlage einstellbar sind, in der die Lamellen (5) parallel zur Mittellängsachse des Ausströmergehäuses (1) ausgerichtet sind, und in eine Diffusbelüftungslage einstellbar sind, in der sie in einem Winkel zwischen 0 ° und 90 ° zur Mittellängsachse ausgerichtet sind, wobei zur Verstellung aller Lamellen (5) gemeinsam ein rastbarer Betätigungsknopf (2,7) vorgesehen ist, der in der Nabe (8) des Halters verschieblich und lösbar arretierbar gehalten ist, **dadurch gekennzeichnet, dass** der Betätigungsknopf (2,7) mittelbar mit einem Hebel (4.1) mit Bremsbelag (4.2) gekoppelt ist, der mit dem Bremsbelag (4.2) in der Spotbelüftungslage an der Wandung des Gehäuses (1) oder der Erweiterung (1") des Gehäuses (1) anliegt, und der in der Diffusbelüftungslage mit Abstand von der Wandung positioniert ist.

**2.** Luftausströmer nach Anspruch 1 **dadurch gekennzeichnet, dass** an dem Betätigungsknopf (2,7) radial abragend Finger (7') mit endseitigem Führungszapfen (7") angeordnet sind, die in Führungskurven (4') von Mitnehmern (4) eingreifen, die mit den Lamellen (5) in Eingriff stehen, wobei der Betätigungsknopf (2,7) in einer gegenüber der Nabe (8) ausgeschobenen Position die Finger (7') mit den Führungszapfen (7") in einen ersten Endbereich der Führungskurven (4') verstellt und die Lamellen (5) in Spotlüftungslage ausrichtet, sowie bei gegenüber der Nabe (8) eingeschobener Position die Finger (7') mit den Führungszapfen (7") in einen zweiten Endbereich der Führungskurven (4') verstellt und die Lamellen (5) in die Diffusbelüftungslage ausrichtet.

**3.** Luftausströmer nach Anspruch 2, **dadurch gekennzeichnet, dass** mindestens ein Mitnehmer (4) einen radial nach außen zur Wandung des Gehäuses (1) oder der Erweiterung (1") hin vorragenden (4.1) Halter aufweist, der den Hebel bildet, der an seinem freien Ende den Bremsbelag (4.2) trägt, so dass bei ausgeschobener Position des Betätigungsknopfes (2,7) der Bremsbelag (4.2) an der Wandung anliegt.

**4.** Luftausströmer nach einem der Ansprüche 1 bis 3, **dadurch gekennzeichnet, dass** an der Nabe (8) eine Herzkurve (6) gehalten ist, die mit einem am Betätigungsknopf (2,7) schwenkbeweglich angeordneten Hebel (3) mit in die Herzkurve (6) eingreifendem Zapfen gekoppelt ist, und dass der Betätigungsknopf (2,7) aus der Position in der er aus der Nabe (8) ausgeschoben ist, in die Position, in der er in die Nabe (8) eingeschoben ist, gegen die Kraft einer Feder (9) betätigbar ist.

**5.** Luftausströmer nach einem der Ansprüche 1 bis 4, **dadurch gekennzeichnet, dass** am Gehäuse (1) ein trichterförmiger Fänger (1.1) im Stellweg des gehäuseinneren Endes des Bedienknopfes (2,7) ausgebildet ist und das Ende (7) des Bedienknopfes (2,7) kegelartig formangepasst verjüngt ist, so dass bei in die Nabe (8) eingeschobenem Bedienknopf (2,7) die Verjüngung in den trichterförmigen Fänger (1.1) eingreift und das Strömungsleitteil zwangsweise koaxial zur Gehäusemittellängsachse ausgerichtet ist.

**6.** Luftausströmer nach einem der Ansprüche 1 bis 5, **dadurch gekennzeichnet, dass** der ringförmige Halter des Strömungsleitteils (13) mittels eines ringförmigen Formteils (14) in der Erweiterung (1") des Gehäuses (1) schwenkbeweglich gehalten ist, wobei das Formteil (14) mit zwei gegenüberliegenden Zapfen (14") und Schwenkwegbegrenzungsstegen in entsprechende Lochungen (1"') in der Wandung der Erweiterung (1") eingesetzt ist und um die Zapfen (14") schwenkbar ist und der Halter (13) an zwei einander gegenüberliegenden Zapfen (14') des Formteils (14) schwenkbar gehalten ist, ohne oder mit Schwenkwegbegrenzungsmitteln, wobei die beiden so gebildeten Schwenkachsen nach Art eines Kardangelenkes einander kreuzend gerichtet sind.
